# EUROPEAN PATENT APPLICATION

(11) **EP 2 222 056 A1**
(43) Date of publication of application: **25.08.2010**
(21) Application number: 09176033.0
(22) Date of filing: 16.11.2009
(51) Int. Cl.: H04L 29/08, H04W 8/20

(54) **Method and system for updating a virtual business card**

(30) Priority: 24.02.2009 US 155008 P
(71) Applicant: RESEARCH IN MOTION LIMITED, Waterloo, Ontario N2L 3W8 (CA)
(72) Inventor: Brown, Robert William, Kanata Ontario K2K 2A5 (CA); Buffam, Bruce Eric, Kanata Ontario K2K 2A5 (CA); O'Rourke, Connor Patrick, Kanata Ontario K2K 2A5 (CA)
(74) Representative: Patel, Binesh

(57) **Abstract**

A method of updating a virtual business card entails receiving the virtual business card, subscribing to an update service that notifies of updates made to the virtual business card, and receiving a notification that an update to the virtual business card has been published. By publishing updates, contacts who subscribe to the business card receive notifications whenever the business card is updated.

## Description

### TECHNICAL FIELD

The present technology relates generally to telecommunications and, in particular, to techniques for communicating updates to information contained in virtual business cards.

### BACKGROUND

Virtual or electronic business cards such as, for example, the vCard, are data files that store personal information - a person's name, title, employer's name, work address, phone number, fax number, e-mail address, etc. These virtual business cards are exchanged frequently amongst business contacts. These vCards can conveniently be sent as e-mail attachments and saved into an address book or contact list where they can be readily consulted and shared with others.

When information on the business card changes, it has been traditionally necessary to distribute or disseminate a new business card to all contacts to replace the obsolete card. Alternatively, the contacts may be advised by e-mail (or other medium) to manually edit the business card information. In each case, however, the chore of updating virtual business card information represents an inconvenience to each of the user's contacts. This has remained, until now, a technical problem for which a solution has yet to be devised.

### BRIEF DESCRIPTION OF THE DRAWINGS

Further features and advantages of the present technology will become apparent from the following detailed description, taken in combination with the appended drawings, in which:

FIG. 1 is a flowchart presenting main steps of a method of receiving an update to a virtual business card in accordance with one aspect of the present technology;

FIG. 2 is a flowchart presenting main steps of a method of publishing an update to a virtual business card in accordance with another aspect of the present technology;

FIG. 3 schematically depicts a system for updating virtual business card information;

FIG. 4 is a schematic depiction of a wireless communications device as one example of a computing device that can be used to publish virtual business card updates and/or subscribe to updates published by other users;

FIG. 5 presents a schematic view of one implementation of the system depicting interactions amongst the client applications, proxy tier, function tier and persistence tier;

FIG. 6 schematically depicts a first user communicating his virtual business card to a second as an e-mail attachment (in the specific context of two mobile users communicating through a common relay);

FIG. 7 schematically depicts a process of requesting authorization to subscribe to updates in the virtual business card;

FIG. 8 presents a detailed message sequence for the authorization procedure depicted in FIG. 7;

FIG. 9 schematically depicts a subscription message flow for subscribing to a business card whereby, upon completion of this procedure, a subscription will have been created in a publish-subscribe subsystem and a record of the subscription will have been saved in a persistent data store;

FIG. 10 presents a detailed message sequence for the subscription procedure depicted in FIG. 9;

FIG. 11 schematically depicts a message flow for publishing changes (updates) made to a virtual business card;

FIG. 12 presents a detailed message sequence for the publish-notify procedure of FIG. 11;

FIG. 13 schematically depicts a message flow for pausing the business card subscription; and

FIG. 14 schematically depicts a message flow for resuming the business card subscription.

It will be noted that throughout the appended drawings, like features are identified by like reference numerals.

### DETAILED DESCRIPTION

In general, the present technology provides an innovative method for disseminating updates in virtual business card information. This method uses a publish-subscribe system to publish changes in the business card information so that contacts who are subscribed to the business card updates automatically receive these updates.

One main aspect of the present technology is a method of updating a virtual business card. The method entails receiving the virtual business card, subscribing to an update service that notifies of updates made to the virtual business card, and receiving a notification that an update to the virtual business card has been published.

Another main aspect of the present technology is a computer-readable medium comprising code which when loaded into memory and executed on a processor of a computing device is programmed to cause the device to receive a virtual business card, subscribe to an update service that notifies of updates made to the virtual business card, and receive a notification that an update to the virtual business card has been published.

Yet another main aspect of the present technology is a system for updating a virtual business card. The system involves a first client associated with a first user and a second client associated with a second user. The system includes a proxy node for routing an update publication message sent by the first client to a predetermined function node to which the first client has already been bound. The system further includes a publish-subscribe server connected to the function node for receiving the update publication message, for identifying users who have subscriptions corresponding to the update publication message, and for communicating an update notification message to the second client.

Still a further main aspect of the present technology is a wireless communications device for publishing updates to a virtual business card. The device includes a processor operatively coupled to a memory for executing a client application that is programmed to enable editing of a virtual business card, and a radiofrequency transceiver for transmitting the virtual business card, receiving subscription requests and authorizing subscriptions. The client application is further programmed to transmit via the radiofrequency transceiver an update publication message upon detecting that the virtual business card has been updated, the update publication message being communicated to a publish-subscribe server for subsequent notification to those to whom subscriptions have been granted.

Yet a further main aspect of the present technology is a wireless communications device for receiving an update to a virtual business card. The device includes a processor operatively coupled to a memory for executing a client application for receiving and storing a virtual business card and a radiofrequency transceiver for transmitting a request to subscribe to an update service that notifies of any updates made to the virtual business card, so as to receive a notification when the update to the virtual business card has been published.

The details and particulars of these aspects of the technology will now be described below, by way of example, with reference to the attached drawings.

### METHOD OVERVIEW

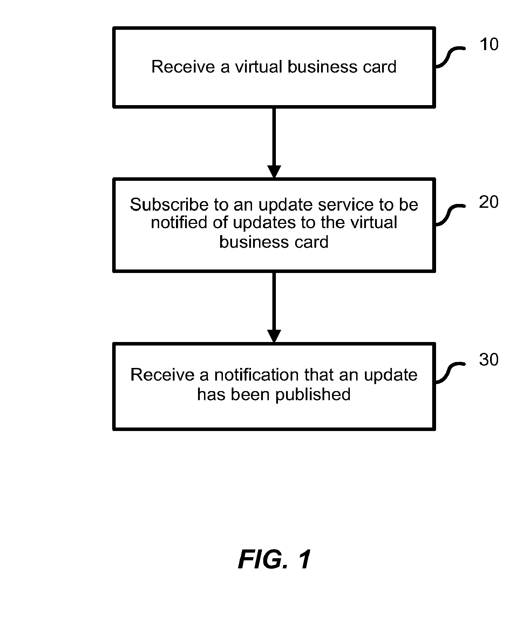

By way of general overview, the present technology provides a method for updating a virtual business card by enabling contacts to whom cards have been offered to subscribe to an update service that notifies of updates made to the business card. With reference to FIG. 1, this method involves receiving a virtual business card (step 10). The business card may be received directly from the owner of the card or from a third party (i.e. an intermediary who shares the card with another person with or without the knowledge of the card owner). The expression "card owner" means the user with whom the virtual business card is associated (i.e. a person whose information is contained with the virtual business card). The virtual business card may be, for example, a vCard or equivalent. The virtual business card may be received as an e-mail attachment.

Once the virtual business card is received, the recipient (contact) may subscribe to an update service (step 20) so as to be notified of updates made to the virtual business card. Updates are changes to the information contained within the card. Updates may include, for example, a new telephone number, a new title, a new address, a new e-mail address, etc. Subscribing may be accomplished by sending a subscription request for requesting authorization to subscribe to the update service and then receiving in reply a subscription acknowledgement to acknowledge that a subscription has been authorized.

Once a subscription is established, the contact may receive a notification that an update has been published (step 30). Notification may entail querying the contact to determine if the contact wishes to download the update or, alternatively, the update may be downloaded automatically upon receipt of the notification.

In one implementation, receipt of a virtual business card automatically triggers the sending of the subscription request. In another implementation, receipt of the virtual business card triggers generation of a query to the recipient of the card to determine whether or not a subscription request should be sent.

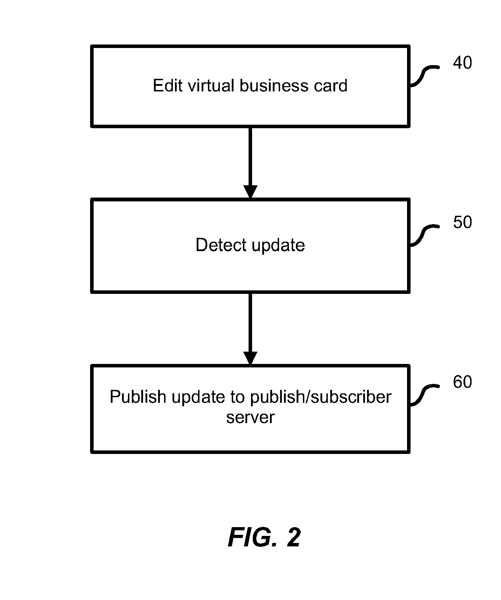

FIG. 2 depicts the method from the point of view of the device publishing the update. As shown in FIG. 2, the user may edit the virtual business card (step 40) in order to update the card. Alternatively, the user may delete an existing card and create a new one. The client application detects the edit or new card as constituting an update (step 50). The update is then published to the publish-subscribe server (step 60) for dissemination to contacts who have valid subscriptions authorized by the user.

The methods disclosed in the present specification can be implemented as coded instructions in a computer program product or computer readable medium. In other words, the computer program product or computer-readable medium stores software code to perform the foregoing methods when loaded into memory and executed on the microprocessor of one or more computing devices.

### SYSTEM OVERVIEW

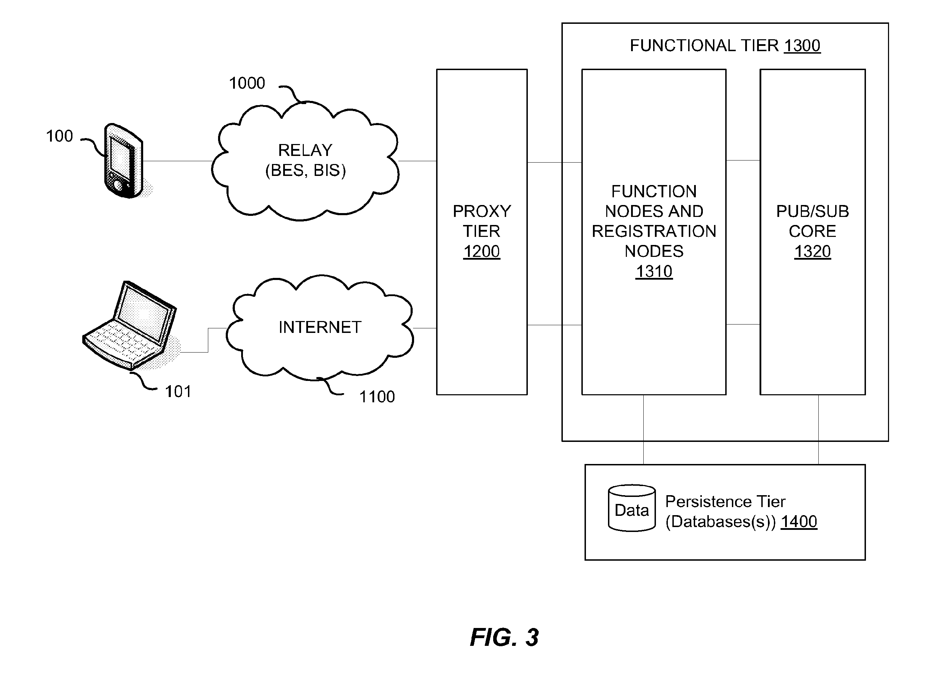

FIG. 3 illustrates an example implementation of a system for updating business card information. As depicted, a wireless communications device 100 and/or a wired computing device 101 may interact with the system via a wireless infrastructure relay 1000 or via an Internet connection. The system includes a proxy tier 1200 (having a plurality of proxy nodes), a function tier 1300 (having a plurality of function nodes) and a persistence tier 1400 (having one or more databases for persistent storage of data, such as, for example, subscription lists). The proxy tier 1200 may be implemented, for example, as a Java application (or alternatively using another language) that executes on a set of proxy nodes connected using a suitable transport protocol to the relay infrastructure 1000 or Internet 1100. The proxy nodes act as gateways which terminate the transport protocols and route messages to their correct destinations. Messages sent from a client to a publish/subscribe core 1320 within the functional tier 1300 are routed by a proxy node to the appropriate function node 1310 in the functional tier based upon the identity of the client.

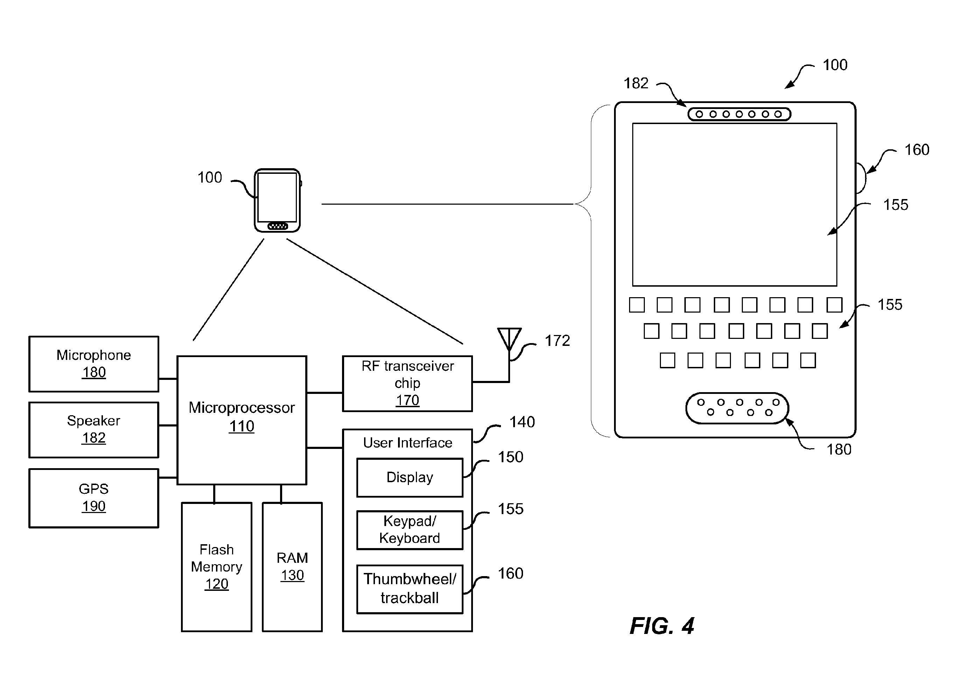

FIG. 4 depicts schematically an example of a wireless communications device 100 that may be employed as part of, or to interact with, the system described above to publish updates to a virtual business card and/or to receive business card updates by subscribing to an update service. As shown in FIG. 3, the device 100 may communicate via the relay 1000 with a proxy node.

For the purposes of this specification, the expression "wireless communications device" is meant to encompass a broad range of electronic communication devices that have processors and memory and which are capable of wireless ("over-the-air") communication. Accordingly, "wireless communications device" is meant to encompass wireless-enabled laptops, tablet PCs, portable, handheld or mobile electronic devices such as smart phones, cell phones, satellite phones, and wireless-enabled PDA's, etc., or any hybrid or multifunction device that has a radio-frequency (RF) transceiver.

Referring to FIG. 4, each wireless communications device 100 includes a microprocessor 110 or central processing unit (or simply a "processor") and a memory for storing data. The memory may include both a Flash memory 120 and a random access memory (RAM) 130. Each wireless communications device 100 also has a user interface 140 that includes a display (graphical user interface - GUI) 150, e.g. an LCD screen, a keyboard/keypad 155 and an optional thumbwheel/trackball 160. Each wireless communications device 100 includes an RF transceiver chip 170 for wireless communications, i.e. receiving and transmitting both voice and data over separate channels. For voice communications, the wireless communications device 100 has a microphone 180 and a speaker 182.

In addition, as shown schematically in FIG. 4, the wireless communications device 100 may include a Global Positioning System (GPS) chipset for obtaining position fixes from orbiting GPS satellites. References to GPS are meant to also include Assisted GPS or Aided GPS.

Although the present disclosure refers expressly to the "Global Positioning System" or "GPS", it should be understood that the term "GPS" is being used expansively to include any satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system. In lieu of, or in addition to, GPS, the wireless communications device may use another type of location-determining subsystem. Although GPS is the best way presently known for obtaining a current position fix, a different type of positioning subsystem or location-determining subsystem can be used, e.g. a radiolocation subsystem that determines its current location using radiolocation techniques, as will be elaborated below. In the main implementation, though, the GPS chipset 190 receives and processes signals from GPS satellites to generate latitude and longitude coordinates, thus making the device "location aware".

In lieu of, or in addition to, GPS coordinates, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. Other location-determining techniques (of varying granularity) can also be employed for the purposes of providing location-related presence data, such as, using the identity of the nearest base station, accessing data stored in a Home Location Register/Visitor Location Register (HLR/VLR), etc.

A wireless communications device 100, such as the one described above, may thus be used for publishing updates to a virtual business card. A client application executing on the device is programmed to enable editing of a virtual business card. Editing of the business card may be accomplished using any suitable user interface device. The client application is also configured to transmit the virtual business card to a designated recipient (contact), to receive subscription requests from contacts and to authorize subscriptions. Authorization of subscriptions may be done automatically (i.e. once a card is given, a subscription is automatically authorized) or selectively (on a case-by-case basis). Selective authorization may involve querying the user to determine if a subscription should be granted. Selective authorization may also involve an artificial intelligence or rules engine making a decision as to whether to authorize the subscription. The client application is further programmed to transmit via the radiofrequency transceiver an update publication message upon detecting that the virtual business card has been updated.

The device 100 may also be employed for receiving an update to a virtual business card, in which case the client application is also configured for receiving and storing a virtual business card. In this case, the client application is also configured to send a request for a subscription to an update service that notifies of any updates made to the virtual business card. When notification is received, the update to the business card may be automatically obtained, as noted above.

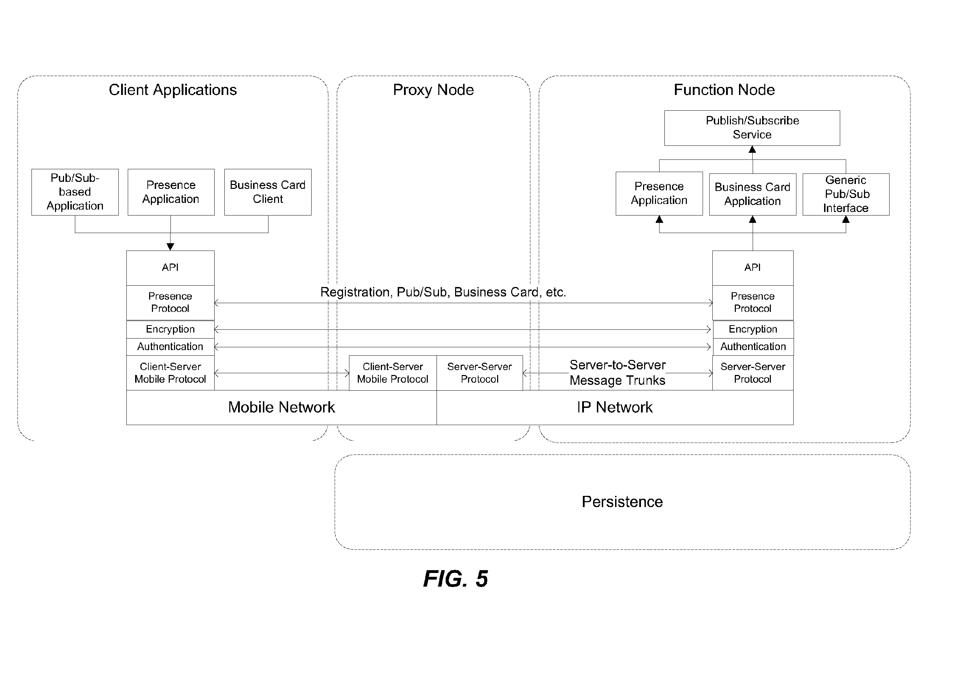

In one implementation, the client application referred to above (i.e. the "business card client" shown in FIG. 5) may interact with a counterpart application on the function node, as shown in FIG. 5. In one specific implementation, the business card client may be used in the context of a presence system in which case the client and function node may communicate using a special presence protocol, as shown by way of example in FIG. 5.

### EXAMPLE PROCEDURE FOR UPDATING A VIRTUAL BUSINESS CARD

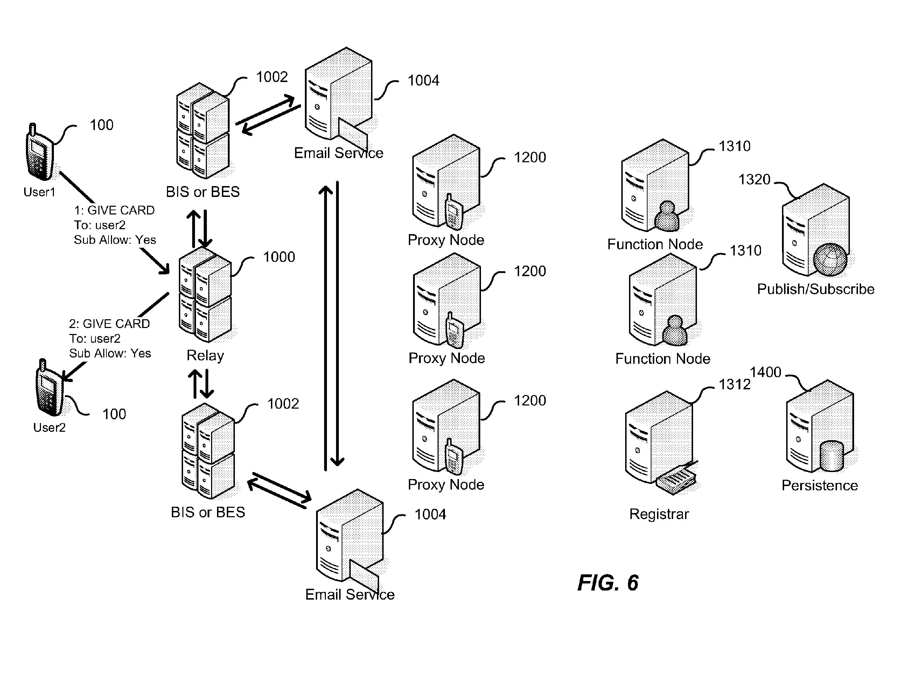

FIG. 6 schematically depicts an initial process whereby a first user ("User1") gives his or her virtual (electronic) business card to a contact or second user ("User2"). This may be accomplished, for example, by sending a vCard as an e-mail attachment. It is appreciated that the vCard is presented solely by way of example, and that a business card of another data format or type could also be exchanged or shared in the same manner. In the specific example presented in FIG. 6, User1 and User2 are communicating via wireless devices. Accordingly, User1's e-mail (with vCard attachment) may be routed, as shown, through relay 1000, enterprise server 1002 and e-mail server 1004.

Furthermore, it is possible to enable users to exchange business cards using other communication methods such as via an Instant Messaging session or through other means.

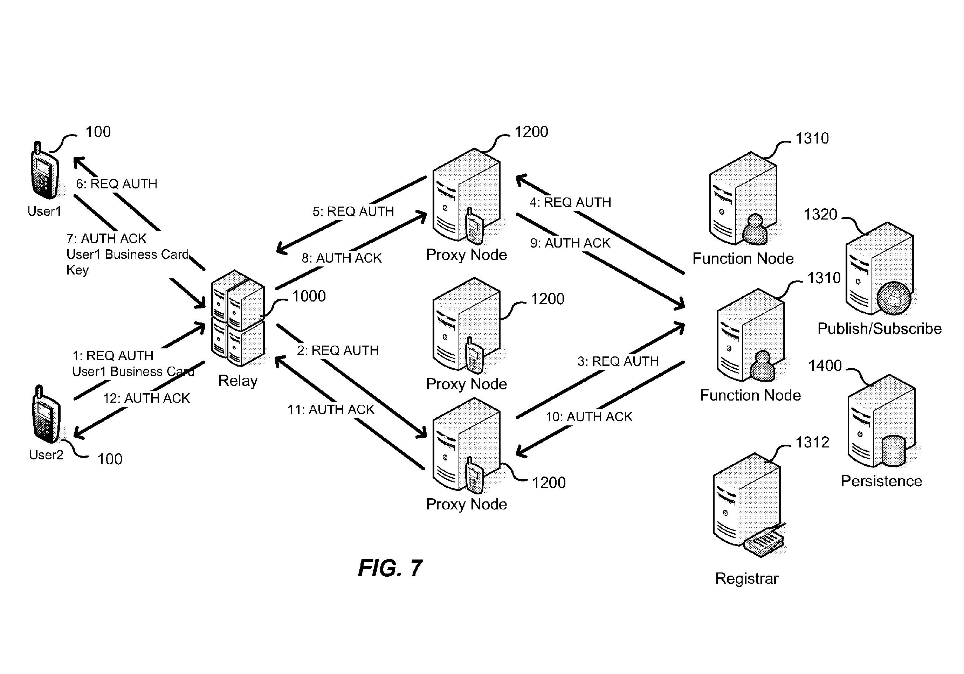

FIG. 7 schematically depicts how a user (in this case User2, i.e. the recipient of the card) may request authorization to subscribe to an update service for the virtual business card so as to automatically receive subsequent updates made to the virtual business card. When a user receives a virtual business card from another user, the recipient user may be offered the choice to subscribe to changes (updates) to the business card information. If the recipient user accepts the offer to subscribe, an authorization procedure, as depicted in FIG. 7, is initiated. In this figure, User2 requests authorization to subscribe to changes in User1's business card. The messages involved in this procedure are exchanged as peer-to-peer (p2p) messages. As part of the authorization procedure, User1 shares an encryption key with User2 to enable decryption of the business card information.

As depicted in FIG. 7, the authorization procedure may involve twelve steps: (1) sending an authorization request from the client device 100 associated with User2 to the relay 1000; (2) forwarding the authorization request from the relay 1000 to a proxy node 1200; (3) forwarding the authorization request from the proxy node to a function node 1310; (4) forwarding the authorization request back a (potentially different) proxy node (1200); (5) forwarding the authorization request back to the relay; (6) forwarding the authorization request to the client device associated with User1 to obtain authorization; (7) sending an authorization acknowledgement to the relay from User1's device; (8) forwarding the authorization acknowledgement to the proxy node; (9) forwarding the authorization request to the function node; (10) forwarding the authorization request back to the proxy node; (11) forwarding the authorization request back to the relay; and (12) forwarding the authorization request back to User2's device.

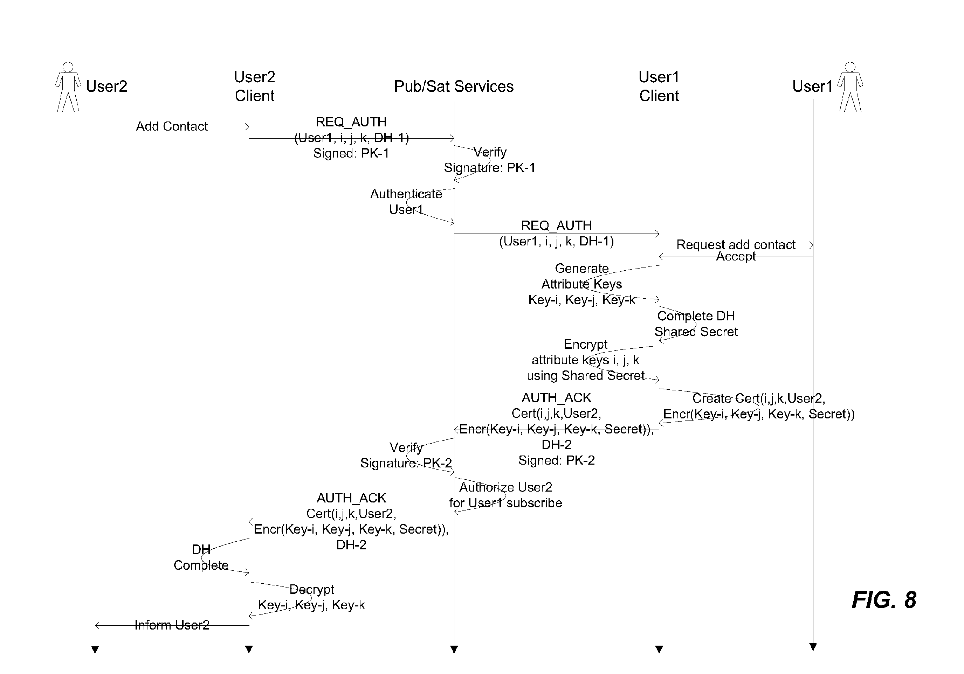

FIG. 8 presents a detailed message sequence for the authorization procedure of FIG. 7. A Diffie-Hellmann key exchange may be used for this authorization procedure. When the authorization procedure is complete, User2 may proceed to create a subscription for updates to the virtual business card.

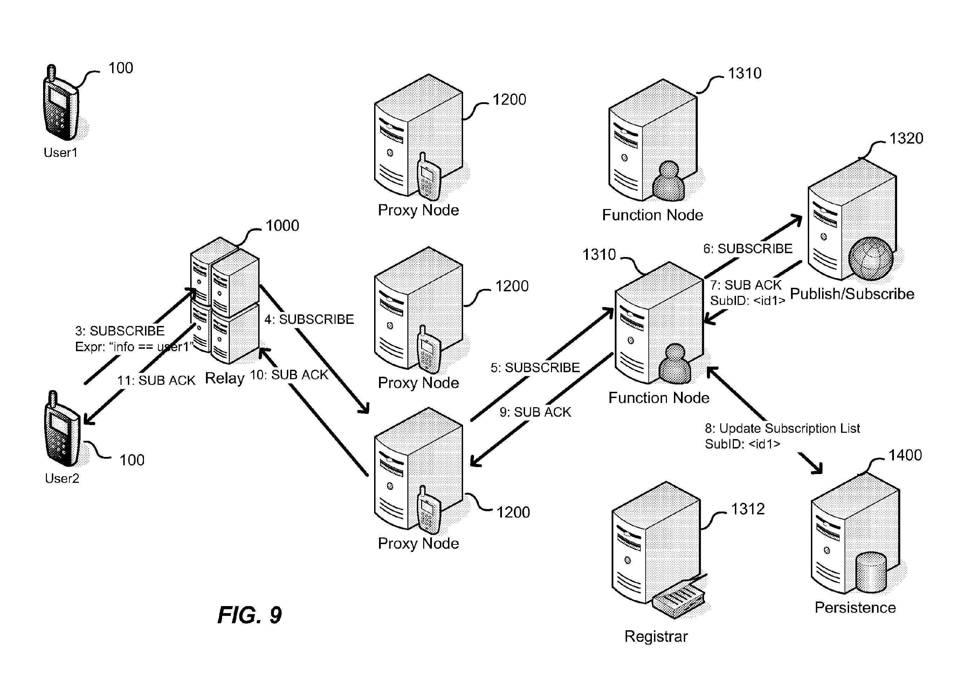

FIG. 9 schematically depicts a subscription message flow for subscribing to a virtual business card. Upon completion of this subscription procedure, a subscription will have been created in a publish-subscribe subsystem 1320 (i.e. in the "Pub-Sub Core" or publish-subscribe server or cluster of servers). A record of the subscription may also be saved as part of a subscription list stored in a persistent data store (persistence tier 1400). As depicted by way of example in FIG. 9, the subscription procedure may entail the following steps: (1) sending a subscription request to the relay from a client device 100 (in this case, User2's client device); (2) forwarding the subscription request from the relay to a proxy node; (3) forwarding the subscription request to a function node; (4) forwarding the subscription request to the publish-subscribe subsystem; (5) returning a subscription acknowledgement from the publish-subscribe subsystem to the function node to indicate that the subscription has been created; (6) updating the subscription list at the persistent data store; (7) forwarding the subscription acknowledgement to the proxy node; (8) forwarding the subscription acknowledgement to the relay; and (9) forwarding the subscription acknowledgement to User2's client device.

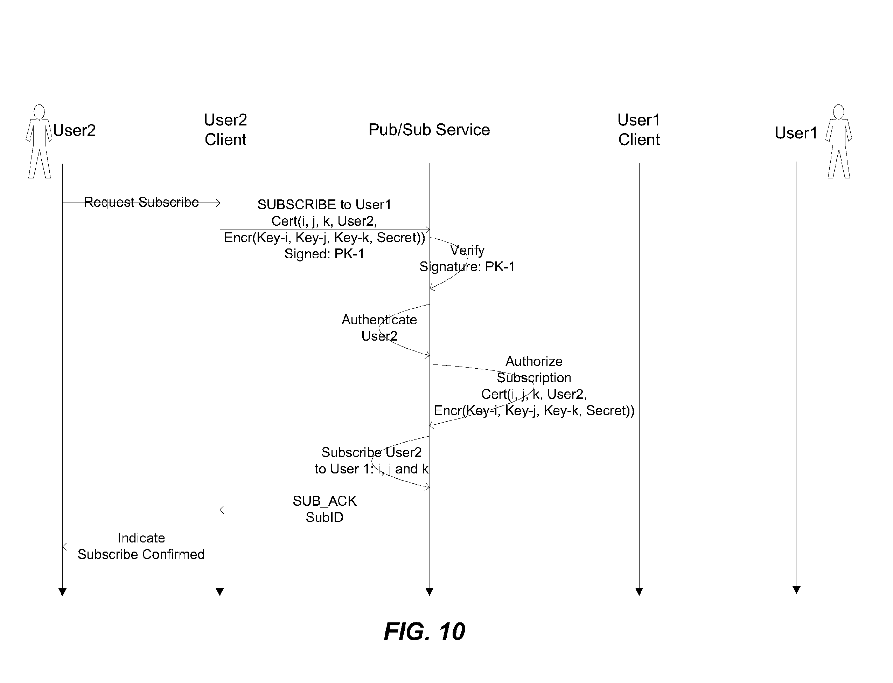

FIG. 10 presents a detailed message sequence, including cryptographic protocol, for the subscription procedure of FIG. 9. As depicted in this figure, when User2 requests a subscription, a subscription request message (SUBSCRIBE) is sent from User2's presence client to the update service which verifies the signature, authenticates User2, authorizes the subscription, subscribes User2 to User1, and then sends a subscription acknowledgement (SUB-ACK) with a subscription ID (SubID) back to User2's presence client, which indicates to User2 that the subscription enrolment process has been completed.

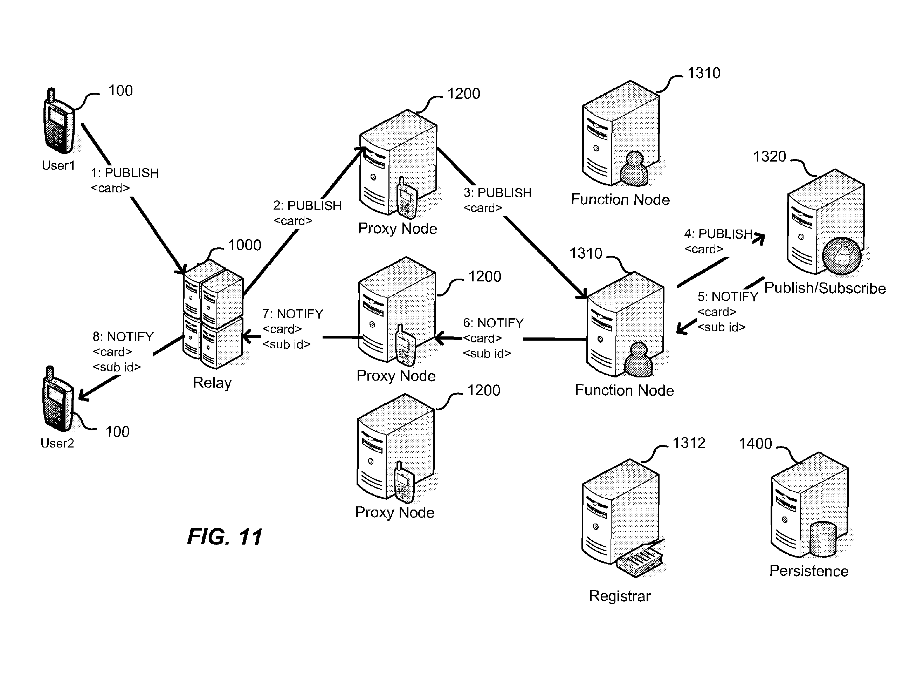

FIG. 11 schematically depicts a message flow for publishing changes or updates made to an electronic or virtual business card. The publication can be done by the user associated with the business card (owner of card) or by another party. Publication can be effected from any computing device, including a mobile device or wireless communications device. As depicted in FIG. 11, the process of updating a business card is initiated when User1 publishes a change to the card by sending a publication message (1:PUBLISH <card>) from, for example, a mobile device 100 to the relay 1000. The relay passes along the publication message (2: PUBLISH <card>) to a proxy node 1200 which forwards the publication message (3: PUBLISH <card>) to a function node 1310 which, in turn, forwards the publication message (4: PUBLISH <card>) to a publish-subscribe server 1320 (pub-sub core). The publish-subscribe server 1320 replies with a notification message (5: NOTIFY <card>, <sub id>) to the function node 1310 which forwards the notification message (6: NOTIFY <card>, <sub id>) to a potentially different proxy node 1200 which, in turn, sends the notification message (7: NOTIFY <card>, <sub id>) to the relay 1000. Upon receipt of this notification message, the relay 1000 communicates the notification message (8: NOTIFY <card>, <sub id>) to User2's device 100.

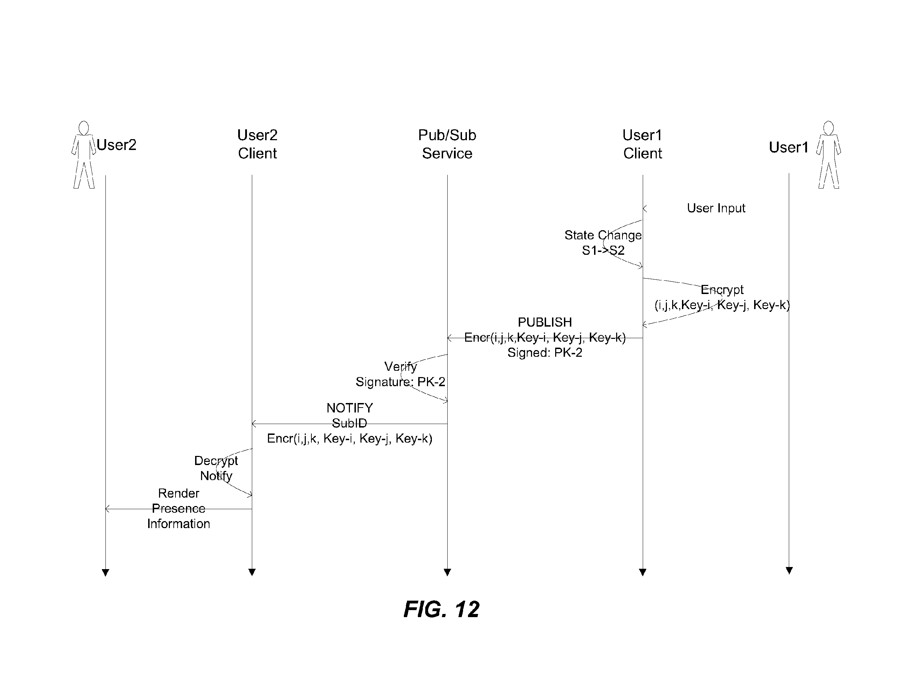

FIG. 12 presents a message sequence for the publish-notify procedure of FIG. 11 by which a first user (User1) publishes a change or update in business card information for which a second user (User2) has a valid subscription. As shown in FIG. 12, user input (e.g. editing of data representing a piece of business card information) from User1's device causes a state change at the User1 client. In other words, User1 can edit business card information (e.g. by changing a phone number extension, title, office address, etc.) in an address book, contacts list, or any other application that exchanges data with the business card client application. Any detected change or update is thus published by the client application. User1's client may encrypt the change in the business card. User1's client then publishes this change via the update service (pub-sub core) which verifies the signature and, assuming the signature is valid, notifies the User2 business card client by sending the subscription ID and the encrypted state change which the User2 business card client can decrypt. The updated information (state change) can then be made available to User2.

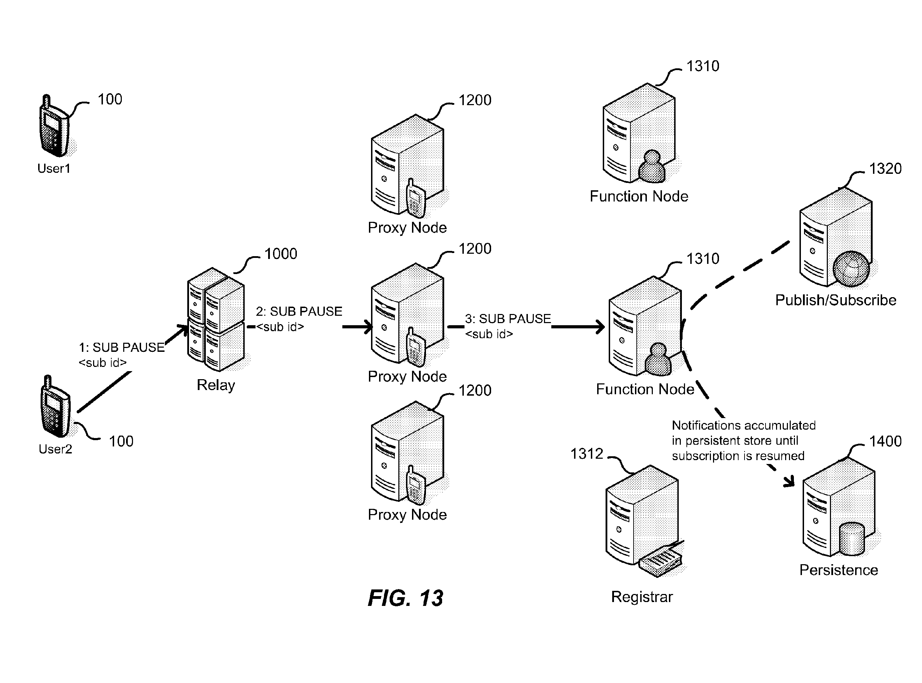

FIG. 13 schematically depicts a message flow for pausing a business card subscription. This figure shows an example in which User2 communicates a subscription pause message (SUB PAUSE <sub id>) to the relay which, in turn, sends a SUB PAUSE message containing the subscription ID to a proxy node. The proxy node sends a SUB PAUSE message (also with the subscription ID) to a function server in the function tier. Thereafter, notifications are merely accumulated in the persistent data store until the subscription is resumed.

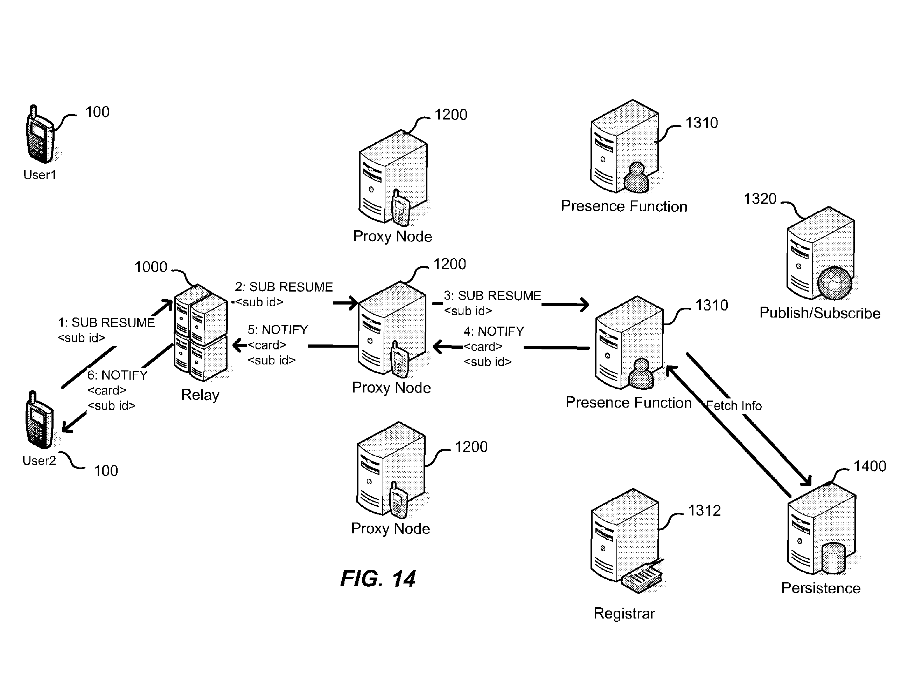

FIG. 14 schematically depicts a message flow for resuming a business card subscription. As depicted in this further example, the subscription can be resumed when User2 communicates a subscription resume message (SUB RESUME <sub id>) containing an identification of the particular subscription that is to be resumed to the relay which communicates a SUB RESUME message to a proxy node. When the proxy node communicates a SUB RESUME message to the function server in the function tier, the function server fetches the information from the persistent data store and notifies the proxy node with a notification message (NOTIFY <card>, <sub id>). The proxy node communicates the notification message to the relay which, in turn, communicates the notification message to the User2 device.

This new technology has been described in terms of specific implementations and configurations which are intended to be exemplary only. The scope of the exclusive right sought by the Applicant is therefore intended to be limited solely by the appended claims.

## Claims

1. A method of updating a virtual business card, the method comprising:
receiving the virtual business card;
subscribing to an update service that notifies of updates made to the virtual business card; and
receiving a notification that an update to the virtual business card has been published.

2. The method as claimed in claim 1 wherein subscribing comprises:
sending a subscription request for requesting authorization to subscribe to the update service; and
receiving a subscription acknowledgement to acknowledge that a subscription has been authorized.

3. The method as claimed in claim 2 wherein the virtual business card is received as an attachment to an e-mail whose arrival automatically triggers the sending of the subscription request.

4. The method as claimed in claim 1 or claim 2 wherein the virtual business card is received as an attachment to an e-mail whose arrival automatically triggers generation of a query to a recipient of the e-mail to determine whether or not the subscription request should be sent.

5. The method as claimed in any one of claims 1 to 4 further comprising receiving a message from the second user to pause a subscription to the virtual business card.

6. The method as claimed in claim 5 further comprising receiving a message from the second user to resume the subscription to the virtual business card.

7. The method as claimed in any one of claims 1 to 6
wherein receiving the notification further comprises automatically updating the virtual business card.

8. A computer-readable medium comprising code which when loaded into memory and executed on a processor of a computing device is programmed to cause the device to perform the method of any one of claims 1 to 7.

9. A system for updating a virtual business card, the system comprising:
a first client associated with a first user;
a second client associated with a second user;
a proxy node for routing an update publication message sent by the first client to a predetermined function node to which the first client has already been bound; and
a publish-subscribe server connected to the function node for receiving the update publication message, for identifying users who have subscriptions corresponding to the update publication message, and for communicating an update notification message to the second client.

10. The system as claimed in claim 9 wherein the update notification node is communicated back through the same function node but through a different proxy node.

11. The system as claimed in claim 9 or claim 10 further comprising a persistent data store for storing a subscription list.

12. A wireless communications device for publishing updates to a virtual business card, the device comprising:
a processor operatively coupled to a memory for executing a client application that is programmed to enable editing of a virtual business card; and
a radiofrequency transceiver for transmitting the virtual business card, receiving subscription requests and authorizing subscriptions,
wherein the client application is further programmed to transmit via the radiofrequency transceiver an update publication message upon detecting that the virtual business card has been updated, the update publication message being communicated to a publish-subscribe server for subsequent notification to those to whom subscriptions have been granted.

13. The device as claimed in claim 12 wherein the processor is configured to:
detect that the virtual business card has been updated; and
instruct the radiofrequency transmitter to transmit the update publication message to a publication-subscription server configured to disseminate the update to those who have subscriptions.

14. A wireless communications device for receiving an update to a virtual business card, the device comprising:
a processor operatively coupled to a memory for executing a client application for receiving and storing a virtual business card; and
a radiofrequency transceiver for transmitting a request to subscribe to an update service that notifies of any updates made to the virtual business card, so as to receive a notification when the update to the virtual business card has been published.
